# EUROPÄISCHE PATENTANMELDUNG

(11) **EP 1 070 796 A1**
(43) Veröffentlichungstag der Anmeldung: **24.01.2001**
(21) Anmeldenummer: 00890229.8
(22) Anmeldetag: 24.07.2000
(51) Int. Cl.: E04B 2/14, E04C 1/41

(54) **Hohlblocktonziegel**

(30) Priorität: 23.07.1999 AT 127499
(71) Anmelder: Roitmair, Helmut, 4632 Pichl bei Wels (AT)
(72) Erfinder: Roitmair, Helmut, 4632 Pichl bei Wels (AT)
(74) Vertreter: Alge, Daniel, Mag. Dr. rer.nat.

(57) **Zusammenfassung**

Die Erfindung betrifft einen Hohlblocktonziegel mit planer Außenseite (4) und Innenseite (5) sowie planer Ober- und Unterseite und mit von der Oberseite zur Unterseite verlaufenden Kammern (1) zur Aufnahme von Wärmedämmstoff (3). Zur Schaffung eines derartigen Ziegels, der optimale Wärmedämmung bietet und eine einfache Verarbeitung zulässt, ist vorgesehen, dass die mit Wärmedämmstoff (3) gefüllten Kammern (1) benachbart der Außenseite (4) entlang dieser angeordnet sind, wogegen im Bereich der Innenseite (5) sowie im Mittenbereich leere Hohlräume (6) zur Speicherung der Wärmeenergie vorgesehen sind. Vorteilhafterweise sind benachbart der Innenseite (5) vorgefertigte Elektroschlitze (2) durch leere Hohlräume gebildet. Der Wärmedämmstoff (3) kann durch ein mit Bindemittel gebundenes Granulat aus vorzugsweise wiederverwertetem Polystyrol gebildet sein.

## Beschreibung

Die Erfindung betrifft einen Hohlblocktonziegel mit planer Außen- und Innenseite sowie planer Ober- und Unterseite und mit von der Oberseite zur Unterseite verlaufenen Kammern zur Aufnahme von Wärmedämmstoff.

Üblicherweise wird beim Hausbau an Ziegelwänden aus Ton oder Lehm das Isoliermaterial nachträglich außen angebracht und dann verputzt bzw. durch einen Außenschutz abgedeckt. Daneben werden auch sogenannte Energiesparziegel verwendet, bei welchen die Ziegelblöcke geteilt, das Isoliermaterial zwischen die Blockhälften eingefüllt und diese anschließend mit Klebemörtel geklebt oder zusammengeschraubt werden.

Die DE 31 00 642 A1 beschreibt einen Hohlbaustein der angegebenen Art, bei dem zur Schaffung eines hohen Wärmedämmvermögens und einer gleichzeitig hohen Tragfähigkeit des Hohlbausteins die Kammern zur Aufnahme von Wärmedämmstoff über den gesamten Querschnitt des Ziegels verteilt vorgesehen sind. Zwischen den Kammern mit Wärmedämmstoff sind leere Hohlräume vorgesehen. Der Nachteil dieser Konstruktion besteht darin, dass die Temperaturverteilung in Abhängigkeit der Dicke des Ziegels im Wesentlichen konstant verläuft, wodurch der Taupunkt relativ weit in der Mitte des Ziegels liegt, wodurch dieser sehr weit durchfeuchtet wird. Durch die Durchfeuchtung eines Ziegels kann es zum Auffrieren der Stege zwischen den Hohlräumen kommen, wodurch die Tragfähigkeit des Hohlbausteins reduziert wird. Darüber hinaus verfügt ein derartiger Hohlbaustein über eine geringe bis kaum vorhandene Speicherwirkung der von der Innenseite herrührenden Wärme.

Ein Wandbauelement mit durch die Anordnung von Hohlräumen hergestellten wärmedämmenden Zone ist beispielsweise in der AT 356 345 B beschrieben. Bei Verwendung derartiger Wandbauelemente wäre zur Wärmedämmung eine Isolierung nachträglich an der Außenseite einer errichteten Wand in herkömmlichen Verfahren notwendig.

Die Aufgabe der vorliegenden Erfindung besteht in der Schaffung eines Hohlblocktonziegels der angegebenen Art, welcher eine optimale Isolierung gewährleistet und darüber hinaus eine vereinfachte Verarbeitung zulässt. Die Nachteile der bekannten Ziegeln sollen vermieden oder zumindest reduziert werden.

Gelöst wird die erfindungsgemäße Aufgabe dadurch, dass die mit Wärmedämmstoff gefüllten Kammern benachbart der Außenseite entlang dieser angeordnet sind, wogegen im Bereich der Innenseite sowie im Mittenbereich leere Hohlräume vorgesehen sind. Durch die mit Wärmedämmstoff gefüllten Kammern nahe der Außenseite wird erreicht, dass der Temperaturverlauf über diesen Bereich des Querschnitts des Ziegels sehr steil verläuft, während der übrige Querschnitt des Ziegels mit den darin befindlichen leeren Hohlräumen zur Wärmespeicherung auf der Innenseite vorhandenen Wärmeenergie dient und einen weniger steilen Temperaturverlauf bewirkt. Infolgedessen wird der Taupunkt sehr nahe der Außenseite des Ziegels liegen, wodurch die Durchfeuchtung des Ziegels nur bis zu einer sehr geringen Tiefe stattfindet und somit die Gefahr des Auffrierens von Stegen des Hohlziegels stark reduziert wird. Es sei erwähnt, dass der Hohlblocktonziegel auch zur Isolierung besonders hoher Außentemperaturen eingesetzt werden kann. Die Verwendung eines derartigen Hohlblocktonziegels mit bereits vorhandenen Kammern mit Wärmedämmstoff vereinfacht die Arbeitsgänge, da ein nachträgliches Anbringen eines Wärmedämmstoffs an der Außenseite der Ziegelwand nicht erforderlich ist. Die Ziegel werden vorzugsweise bereits werkseitig mit dem Wärmedämmstoff gefüllt und so an die jeweilige Baustelle transportiert.

Eine bessere Kombination von Wärmedämmung und Festigkeitseigenschaften des Hohlblocktonziegels kann erreicht werden, wenn benachbart der Außenseite entlang dieser zumindest zwei Reihen von mit Wärmedämmstoff gefüllten Kammern vorgesehen sind.

Wenn gemäß einem weiteren Merkmal der Erfindung benachbart der Innenseite vorgefertigte Elektroschlitze durch leere Hohlräume definiert sind, welche zur Verlegung von Elektroleitungen od.dgl. dienen, können weitere Arbeitsschritte vermieden bzw. vereinfacht werden, da keine bzw. kaum Stemmarbeiten für Elektroinstallationen oder andere Installationen notwendig sind.

Wenn diese Elektroschlitze in Bezug auf die Längsmitte des Ziegels symmetrisch angeordnet sind, kann erreicht werden, dass trotz der bautechnisch erforderlichen Versetzung von Hohlziegelblöcken eine durchgehende Öffnung bzw. ein durchgehender Schacht vom Boden bis zur Decke erhalten wird, wodurch ein Großteil der Stemmarbeiten für die spätere Anbringung von Installationsleitungen vermieden werden kann. Vorzugsweise befinden sich in jedem Hohlblocktonziegel zwei Elektroschlitze, und zwar einer links der Mitte und einer rechts der Mitte neben der Innenseite des Ziegels.

Gemäß einem weiteren Merkmal der Erfindung ist für den Einsatz als Eckziegel auch benachbart einer zwischen der Außenseite und der Innenseite verlaufenden Stirnseite entlang dieser eine mit Wärmedämmstoff gefüllte Kammer vorgesehen. Mit solchen Eckziegeln und Normalziegeln kann ein komplettes Bausystem zum einfachen Kombinieren erreicht werden.

Vorteilhafterweise ist als Wärmedämmstoff ein mit einem Bindemittel gebundenes Granulat aus Polystyrol vorgesehen. Insbesondere wiederverwertetes Granulat aus Polystyrol, welches häufig als Verpackung verwendet wird, eignet sich hervorragend als Wärmedämmstoff.

Die Bindemittel können mineralische, hydraulische bzw. hochhydraulische Komponenten aufweisen. Als hydraulische Komponenten können beispielsweise Steinmehl oder Trassite (Traß) und als hochhydraulische Komponenten Zemente etc. dienen. Ein Verhältnis von 75 % hyraulischen und 25 % hochhydraulischen Bindemittelkomponenten hat sich als geeignet herausgestellt.

Weitere Vorteile ergeben sich, wenn im Bindemittel des Wärmedämmstoffes Luftporen gebildet sind.

Vorzugsweise ist die Ober-und Unterseite des Ziegels plangeschliffen, wodurch die Ziegel nahezu fugenlos verklebt werden können und Zwischenräume, beispielsweise bis maximal 1 mm erzielt werden können. Dadurch wird die Verarbeitungsform sehr vereinfacht und werden Kältebrücken durch das fugenlose Verkleben vermieden.

Wenn die Außenseite und bzw. oder die Innenseite des Hohlblocktonziegels porös ausgebildet ist, kann eine nachträgliche Aufbringung einer Beschichtung an der Außen- und Innenseite erleichtert werden. Dadurch wird beispielsweise dem Mörtel eines Außenverputzes Halt geboten. Dadurch muss im Außen- und bzw. oder im Innenbereich lediglich ein Netz mit herkömmlicher Spachtelmasse eingespachtelt werden, worauf dann unmittelbar die Endbeschichtung, wie etwa Maleranstrich, Tapeten, Reibeputz od.dgl. angeordnet wird. Ein Feinputz ist nicht mehr erforderlich. Mit Hilfe des erfindungsgemäßen Hohlblocktonziegels ist zur Oberflächengestaltung der Außen- und bzw. oder Innenseite lediglich eine Verspachtelung und Endbeschichtung notwendig.

Die Merkmale der Erfindung werden an Hand der beigefügten Zeichnungen näher erläutert.

Darin zeigen:
- Fig. 1: die Draufsicht auf eine Ausführungsform eines Hohlblocktonziegels gemäß der Erfindung,
- Fig. 2: eine Draufsicht auf einen als Eckziegel ausgebildeten Hohlblocktonziegel, und
- Fig. 3: die Draufsicht auf eine weitere Ausführungsform eines erfindungsgemäßen Hohlblocktonziegels.

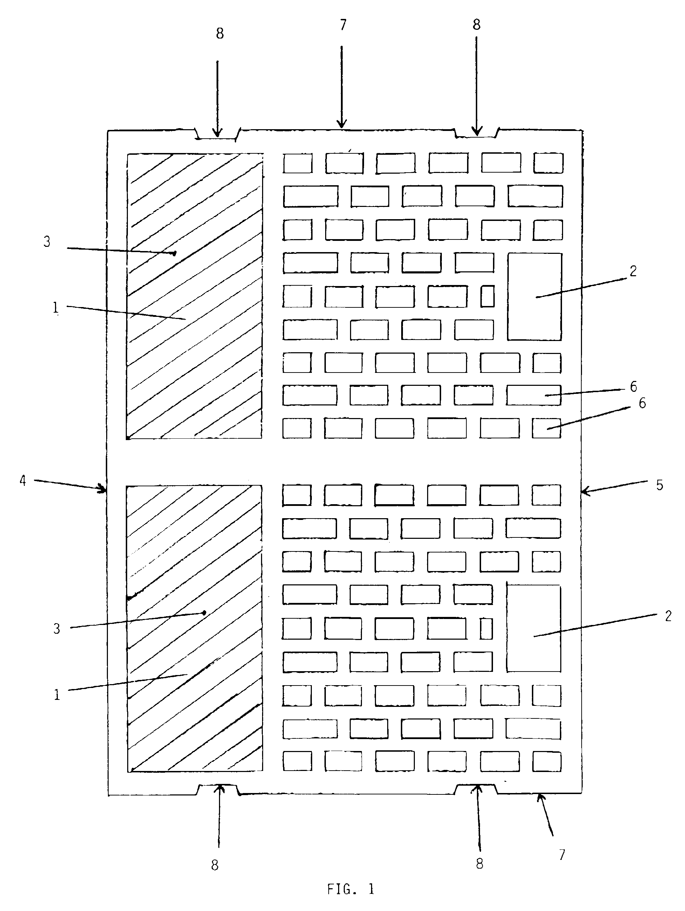

Fig. 1 zeigt die Draufsicht auf eine Ausführungsform eines Hohlblocktonziegels, welcher als Decken-, Boden- oder Wandziegel ausgebildet und in herkömmlicher Weise aus Ton oder Lehm hergestellt sein kann. Der Hohlblocktonziegel weist eine plane Außenseite 4 und eine plane Innenseite 5 sowie ebenfalls plane Ober-und Unterseiten auf. Benachbart der Außenseite 4 sind zwei mit Wärmedämmstoff 3 gefüllte Kammern 1 angeordnet, wogegen in der Zone im Bereich der Innenseite 5 sowie im Mittenbereich leere Hohlräume 6 vorgesehen sind. Zur Befüllung der Kammern 1 können alle einschlägigen Wärmedämmstoffe 3 sowie alle zukünftigen technischen Weiterentwicklungen verwendet werden. Beispielsweise kann Polystyrol in Form entsprechend großer Blöcke oder in Form eines Granulats mit einem speziellen Bindemittel erfolgen. Dabei wird vorzugsweise wiederverwertetes Granulat aus Polystyrol eingesetzt. Die Befüllung der Kammern 1 mit Wärmedämmstoff 3 erfolgt vorzugsweise bereits im Ziegelwerk, so dass an der Baustelle der Arbeitsschritt der Wärmedämmung entfallen kann. Durch die erfindungsgemäße Anordnung des Hohlblocktonziegels wird im Innenbereich anschließend an die Innenseite 5 eine durch die Hohlräume 6 gebildete große Speicherzone gebildet, welche die im Inneren des Gebäudes existierende Wärmeenergie speichert. Die an der Außenseite 4 befindlichen Kammern 1 mit Wärmedämmstoff 3 schaffen eine Barriere für allfällige niedrige Außentemperaturen zu schaffen. Im Bereich der Kammern 1 mit Wärmedämmstoff 3 verläuft die Temperatur in Abhängigkeit der Dicke des Ziegels sehr steil, wodurch der Taupunkt im Außenbereich, nahe der Außenseite 4 liegt und somit nur eine begrenzte Durchnässung des Ziegels stattfindet und eine Gefahr des Auffrierens von Stegen zwischen den Kammern 1 und Hohlräumen 6 reduziert wird. Vorteilhafterweise sind im Bereich der Innenwand 5 Elektroschlitze 2 durch leere Hohlräume definiert, in die später unter Vermeidung der meisten Stemmarbeiten Installationsleitungen verlegt werden können. Die Elektroschlitze 2 sind in Bezug auf die Längsmitte des Ziegels symmetrisch angeordnet, so dass trotz der bautechnisch erforderlichen Versetzung der Ziegel eine durchgehende Öffnung zur Verlegung von Installationsleitungen erhalten wird. An den Stirnseiten 7 des Hohlblocktonziegels können in bekannter Weise Nuten 8 zur Verbindung benachbarter Hohlblockziegel unter Verwendung eines Verarbeitungsprofils vorgesehen sein, wodurch ein optimales Anpassen benachbarter Hohlblockziegel erreicht werden kann. An Stelle beidseitiger Nuten 8 benachbarter Hohlblocktonziegel kann auch ein bekanntes Nut-Feder-System verwendet werden. Die Ober- und Unterseite des Ziegels ist vorteilhafterweise plan geschliffen, so dass eine nahezu fugenlose Verklebung möglich wird. Für die Verarbeitung wird herkömmlicher Klebemörtel zur Verklebung der Hohlblockziegel an der Ober- und Unterseite verwendet. An den Stirnseiten 7 ist grundsätzlich kein Klebemörtel erforderlich. An jenen Stellen jedoch, wo eine besondere Festigkeit, etwa im Bereich von Zwischenwänden od.dgl. gewünscht oder gefordert wird, kann auch an den Stirnseiten 7 Klebemörtel verwendet werden. Die Außenseite 4 und Innenseite 5 ist vorteilhafterweise leicht porös ausgebildet, um dem nachträglich aufgebrachten Material besseren Halt zu bieten. Die Außenseite 4 und Innenseite 5 des Ziegels kann auch mit Rillen versehen sein. Zwischen der Außenseite 4 und den Kammern 1 mit dem Wärmedämmstoff 3 sowie zwischen benachbarten Kammern 1 mit Wärmedämmstoff 3 können auch Hohlräume 6 vorgesehen sein (nicht dargestellt).

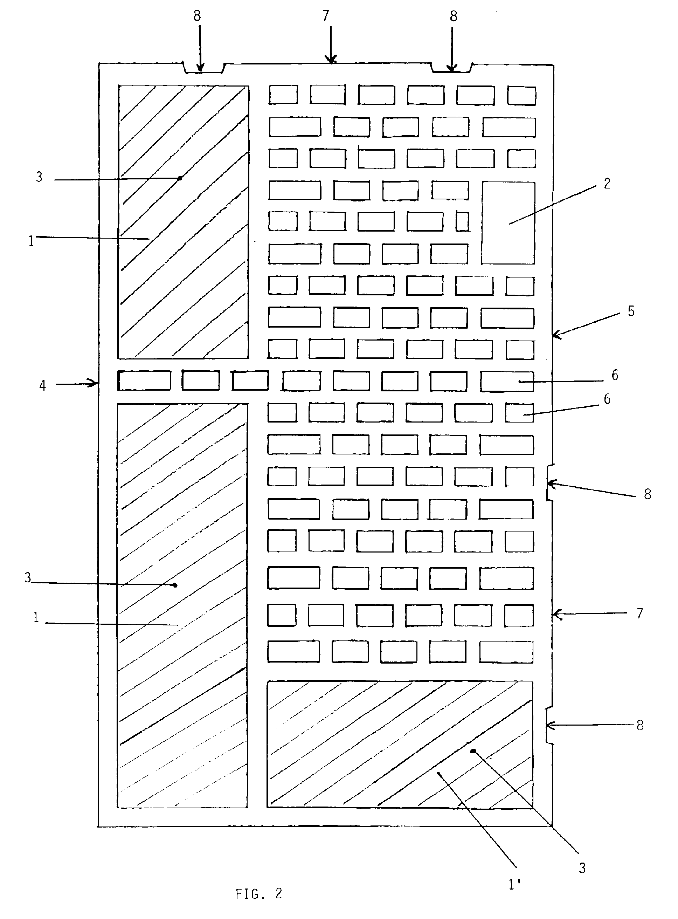

Fig. 2 zeigt die Draufsicht auf einen als Eckziegel ausgebildeten Hohlblocktonziegel gemäß der Erfindung, wobei benachbart einer zwischen der Außenseite 4 und der Innenseite 5 verlaufenden Stirnseite 7 entlang dieser eine weitere mit Wärmedämmstoff 3 gefüllte Kammer 1' vorgesehen ist. Darüber hinaus ist zwischen den benachbarten Kammern 1 mit Wärmedämmstoff 3 eine Reihe mit Hohlräumen 6 angeordnet. Ein derartig ausgebildeter Eckziegel kann durch Drehung entlang der Längsachse um 180° und Wenden um 60° trotz phasenverschobener Ziegelreihen für alle Ecken verwendet werden. Zur Verbindung mit Normalziegeln können an den Stirnseiten 7 Nuten 8 vorgesehen sein.

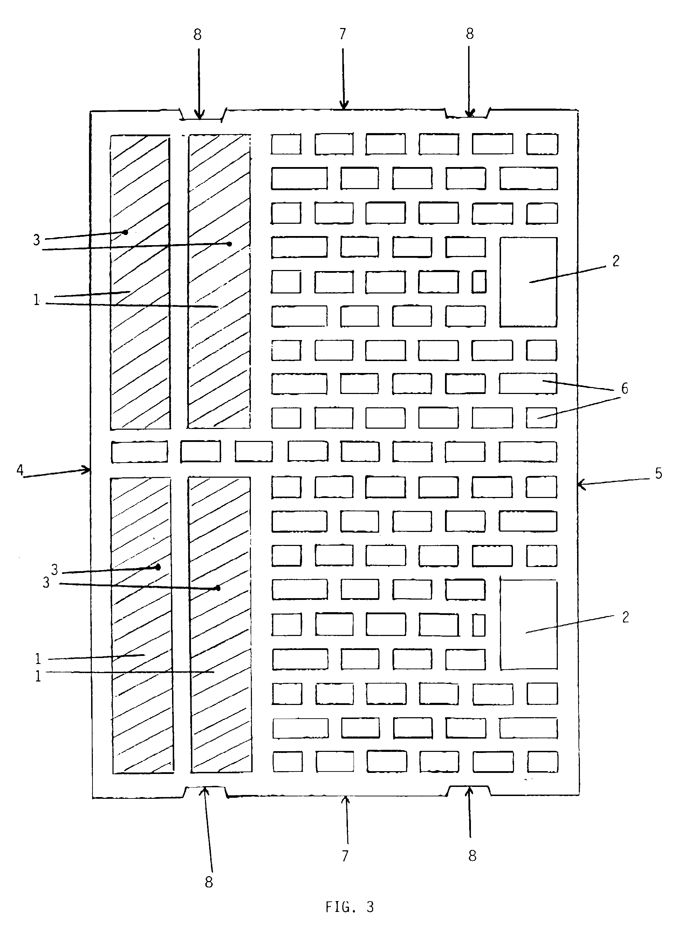

Fig. 3 zeigt die Draufsicht auf eine weitere Ausführungsform der Erfindung, wobei benachbart der Außenseite 4 entlang dieser zwei Reihen von mit Wärmedämmstoff 3 gefüllten Kammern 1 vorgesehen sind. Auch hier ist zwischen den in Längsrichtung aufeinanderfolgenden Kammern 1 eine Reihe mit Hohlräumen 6 vorgesehen. Die von der Außenseite 4 und Innenseite 5 gesehen jeweils zweiten Hohlräume 6 der genannten Reihe stimmen in ihrer Position mit den Positionen der Nuten 8 an den Stirnseiten überein, so dass beim Teilen des Ziegels durch die Längsmitte auch diese Hohlräume 6 als Unterstützung zur Verbindung mit benachbarten Ziegeln dienen können.Eine derartige Konstruktion zeichnet sich durch bessere Wärmedämmung bessere Festigkeitseigenschaften durch den zwischen den Kammern 1 gebildeten Stegen aus.

Der Hohlblocktonziegel gemäß dieser Beschreibung kann unabhängig seiner Dimensionierung für Außenwände aber auch für Zwischenwände verwendet werden. Ebenso können Deckenziegel oder Abschlusswinkel mit Wärmedämmstoffen gefüllt eingesetzt werden.

Mit einem erfindungsgemäß ausgebildeten Hohlblockbetonziegel kann eine bessere Wärmedämmung gegenüber herkömmlichen Ziegeln erzielt werden. Gegenüber Ziegelwänden aus herkömmlichen Ziegeln samt nachträglich aufgebrachte Wärmeisolierung wird zumindest eine gleichwertige Wärmedämmung erreicht, wobei allerdings der Arbeitsschritt der nachträglichen Aufbringung der Wärmeisolierung beim Ziegel gemäß der vorliegenden Beschreibung entfallen kann.

## Patentansprüche

1. Hohlblocktonziegel mit planer Außenseite (4) und Innenseite (5) sowie planer Ober- und Unterseite und mit von der Oberseite zur Unterseite verlaufenden Kammern (1) zur Aufnahme von Wärmedämmstoff (3), dadurch gekennzeichnet, dass die mit Wärmedämmstoff (3) gefüllten Kammern (1) benachbart der Außenseite (4) entlang dieser angeordnet sind, wogegen im Bereich der Innenseite (5) sowie im Mittenbereich leere Hohlräume (6) vorgesehen sind.

2. Hohlblocktonziegel nach Anspruch 1, dadurch gekennzeichnet, dass benachbart der Außenseite (4) entlang dieser zumindest zwei Reihen von mit Wärmedämmstoff (3) gefüllten Kammern (1) vorgesehen sind.

3. Hohlblocktonziegel nach Anspruch 1 oder 2, dadurch gekennzeichnet, dass benachbart der Innenseite (5) vorgefertigte Elektroschlitze (2) durch leere Hohlräume definiert sind.

4. Hohlblocktonziegel nach Anspruch 3, dadurch gekennzeichnet, dass die Elektroschlitze (2) in Bezug auf die Längsmitte des Ziegels symmetrisch angeordnet sind.

5. Hohlblocktonziegel nach einem der Ansprüche 1 bis 4, dadurch gekennzeichnet, dass für den Einsatz als Eckziegel auch benachbart einer zwischen der Außenseite (4) und der Innenseite (5) verlaufenden Stirnseite (7) entlang dieser eine mit Wärmedämmstoff (3) gefüllte Kammer (1') vorgesehen ist.

6. Hohlblocktonziegel nach einem der Ansprüche 1 bis 5, dadurch gekennzeichnet, dass als Wärmedämmstoff (3) mit einem Bindemittel gebundenes Granulat aus Polystyrol vorgesehen ist.

7. Hohlblocktonziegel nach Anspruch 6, dadurch gekennzeichnet, dass das Bindemittel mineralische, hydraulische bzw. hochhydraulische Komponenten aufweist.

8. Hohlblocktonziegel nach Anspruch 6 oder 7, dadurch gekennzeichnet, dass im Bindemittel des Wärmedämmstoffes (3) Luftporen gebildet sind.

9. Hohlblocktonziegel nach einem der Ansprüche 1 bis 8, dadurch gekennzeichnet, dass die Ober- und Unterseite plangeschliffen sind.

10. Hohlblocktonziegel nach einem der Ansprüche 1 bis 9, dadurch gekennzeichnet, dass die Außenseite (4) und bzw. oder die Innenseite (5) porös ausgebildet sind.
